# EUROPÄISCHE PATENTANMELDUNG

(11) **EP 3 456 486 A1**
(43) Veröffentlichungstag der Anmeldung: **20.03.2019**
(21) Anmeldenummer: 17191340.3
(22) Anmeldetag: 15.09.2017
(51) Int. Cl.: B25J 9/16

(54) **REDUNDANTE DIVERSITÄRE KOLLISIONSÜBERWACHUNG**

(71) Anmelder: Siemens Aktiengesellschaft, 80333 München (DE)
(72) Erfinder: Bretschneider, Jochen, 73732 Esslingen (DE); Handeck, Jörg, 91058 Erlangen (DE); Mihatsch, Steffen, 71272 Renningen (DE); Schmauder, Steffen, 71272 Renningen (DE); Weber, Curd, 75056 Sulzfeld (DE)

(57) **Zusammenfassung**

Verfahrbare Elemente (1 bis 3, 6 bis 8, 10) einer Maschine werden von einer Steuereinrichtung (4) der Maschine durch Ansteuerung von Antrieben (5) der Maschine verfahren. Zum Überwachen der Verfahrbewegung der verfahrbaren Elemente (1 bis 3, 6 bis 8, 10) auf Kollision untereinander oder mit einem ortsfest angeordneten Element (16) prüfen mehrere Überwachungseinrichtungen (17, 18) unabhängig voneinander aufgrund der Ausführung eines jeweiligen Computerprogramms (11, 14), ob eine Kollision eines verfahrbaren Elements (1 bis 3, 6 bis 8, 10) der Maschine mit einem anderen verfahrbaren Element (1 bis 3, 6 bis 8, 10) der Maschine oder dem im Arbeitsraum (15 ortsfest angeordneten Element (16) droht. Je nachdem, ob die Überwachungseinrichtungen (17, 18) die Gefahr einer Kollision erkennen oder nicht, greifen sie unabhängig voneinander korrigierend in die Ansteuerung der Antriebe (5) ein oder nicht ein bzw. geben unabhängig voneinander eine Alarmmeldung aus oder nicht. Die beiden Computerprogramme (11, 14) sind diversitär ausgebildet.

## Beschreibung

Die vorliegende Erfindung geht aus von einem Überwachungsverfahren für eine Verfahrbewegung von verfahrbaren Elementen einer Maschine, wobei die verfahrbaren Elemente von einer Steuereinrichtung der Maschine durch Ansteuerung von Antrieben der Maschine verfahren werden,
- wobei eine erste Überwachungseinrichtung aufgrund der Ausführung eines ersten Computerprogramms
   -- prüft, ob eine Kollision eines verfahrbaren Elements der Maschine mit einem anderen verfahrbaren Element der Maschine oder mit einem ortsfest angeordneten Element droht, und
   -- je nachdem, ob sie die Gefahr einer Kollision erkennt oder nicht, korrigierend in die Ansteuerung der Antriebe eingreift oder nicht eingreift oder eine Alarmmeldung an einen Bediener der ersten Überwachungseinrichtung ausgibt oder nicht ausgibt.

Die vorliegende Erfindung geht weiterhin aus von einem ersten Computerprogramm, wobei das erste Computerprogramm ersten Maschinencode umfasst, der von einer ersten Überwachungseinrichtung unmittelbar abarbeitbar ist, wobei die Abarbeitung des ersten Maschinencodes durch die erste Überwachungseinrichtung bewirkt, dass die erste Überwachungseinrichtung ein derartiges Überwachungsverfahren ausführt.

Die vorliegende Erfindung geht weiterhin aus von einer ersten Überwachungseinrichtung, wobei die erste Überwachungseinrichtung mit einem derartigen ersten Computerprogramm programmiert ist, so dass die erste Überwachungseinrichtung im Betrieb ein derartiges Überwachungsverfahren ausführt.

Maschinen im Sinne der vorliegenden Erfindung sind beispielsweise Werkzeugmaschinen, Produktionsmaschinen und Roboter. Werkzeugmaschinen sind Maschinen, mittels derer über lagegeregelt verfahrbare Elemente der Werkzeugmaschine ein Werkzeug relativ zu einem Werkstück in definierter Weise zumindest positioniert und oftmals auch orientiert wird. Meist erfolgt eine konturverändernde Bearbeitung, insbesondere eine konturabtragende Bearbeitung, beispielsweise eine spanende Bearbeitung. Das Werkzeug kann beispielsweise ein Bohrer oder ein Fräser sein. Die Bearbeitung des Werkstücks durch die Werkzeugmaschine kann durch Zeiträume unterbrochen sein, während derer das Werkzeug sich nicht mit dem Werkstück in Eingriff befindet. Beispiele derartiger Zeiträume sind die Umpositionierung des Werkzeugs relativ zum Werkstück und Fahrten zum Werkzeugwechsel. Auch andere Verfahrbewegungen sind möglich, beispielsweise manuell gesteuerte Verfahrbewegungen. Das Verfahren des Werkzeugs relativ zum Werkstück erfolgt bei einer Werkzeugmaschine über lagegeregelte Achsen. Meist sind mindestens drei lagegeregelten Achsen vorhanden. Es sind aber auch Werkzeugmaschinen mit mehr oder weniger als drei lagegeregelten Achsen bekannt.

Produktionsmaschinen sind andere Maschinen, die beispielsweise nur ein Umsetzen von Werkstücken von einem Ort an einen anderen Ort bewirken. Roboter sind universell einsetzbare Maschinen.

Die verfahrbaren Elemente der Maschine werden insbesondere in einem Arbeitsraum der Maschine verfahren. Hierbei besteht die Gefahr von Kollisionen. Kollisionen können beispielsweise zwischen den verfahrbaren Elementen der Maschine untereinander auftreten. Auch Kollisionen der verfahrbaren Elemente mit feststehenden Elementen sind möglich. Beispielsweise bei einer Werkzeugmaschine können Kollisionen zwischen dem Werkzeug oder einem Werkzeughalter mit dem Werkstück oder einem Werkstückhalter auftreten. Auch Kollisionen mit anderen Einrichtungen wie beispielsweise feststehenden Elementen der Maschine oder Messeinrichtungen sind möglich. Diese Elemente - gegebenenfalls einschließlich des Werkstücks - können in einem allgemeinen Sinn als Elemente der Maschine angesehen werden.

Im Falle einer Kollision können zum einen erhebliche Schäden auftreten, die bereits als solche hohe Kosten verursachen. Ferner muss die Maschine während einer derartigen Reparatur außer Betrieb gesetzt werden, so dass zusätzlich auch Ausfallzeiten auftreten. Dem Kollisionsschutz kommt daher eine große Bedeutung zu.

Im Stand der Technik sind verschiedene Vorgehensweisen zur Vermeidung von Kollisionen bekannt. Sie arbeiten in jedem Fall unter enger Ankopplung an den tatsächlichen Betrieb der Maschine. Viele dieser Verfahren arbeiten modellgestützt. Bei derartigen Verfahren werden die einzelnen Körper - insbesondere die verfahrbaren und die ortsfesten Elemente der Maschine - modelliert und entsprechend der jeweiligen Ansteuerung der Antriebe in einem virtuellen Abbild positioniert. Im Falle lagegeregelter Antriebe wird bei manchen Modellen mit Lagewerten aus der Vergangenheit gearbeitet In diesem Fall, wenn also mit Lagewerten aus der Vergangenheit gearbeitet wird, kann das Modell mit den Lagewerten der unmittelbar vorhergehenden Sollansteuerung der Antriebe oder mit den Lagewerten der unmittelbar vorhergehenden Istansteuerung arbeiten. Bei anderen Modellen wird mit Lagewerten für die Zukunft gearbeitet. In diesem Fall kann das Modell mit den Lagewerten der unmittelbar bevorstehenden Sollansteuerung der Antriebe arbeiten. Bei anderen Verfahren werden kontinuierlich über Sensoren verschiedenster Art die tatsächlichen Abstände der verschiedenen Elemente der Maschine relativ zueinander erfasst und ermittelt. Diese Verfahren arbeiten ohne Verwendung eines Modells. In jedem Fall wird auf Gefahr einer Kollision erkannt, wenn Mindestabstände zwischen den verschiedenen Elementen der Maschine erreicht oder unterschritten werden.

Die bekannten Überwachungsverfahren arbeiten im Regelfall bereits recht gut. Sie sind aber nicht fehlerfrei. Eine mögliche Fehlerursache ist beispielsweise eine Lücke in einem verwendeten Algorithmus zur Kollisionsvermeidung ("ein Denkfehler bei der Ermittlung des Algorithmus"). Eine weitere mögliche Fehlerursache ist ein Programmierfehler bei der Implementierung des verwendeten Algorithmus ("richtig gedacht, aber falsch gemacht"). Auch andere Fehler sind möglich, beispielsweise eine fehlerhafte Parametrierung eines Modells der Maschine durch den Hersteller der Maschine oder eine fehlerhafte Vorgabe eines Setups - beispielsweise im Falle einer Werkzeugmaschine eines Werkstück- und/oder Werkzeug-Setups - durch den Bediener der Maschine. In seltenen Einzelfällen kann es auch zu einem Versagen der Hardware kommen.

Im Stand der Technik ist bekannt, vorab eine Simulation des Betriebs der Maschine auf Basis des Modells der Maschine in der Arbeitsvorbereitung auszuführen. Wenn der Setup an der Maschine jedoch nicht exakt mit dem Szenario in der Simulation übereinstimmt - beispielsweise weil ein anderes Werkzeug verwendet wird - kann es im realen Betrieb der Maschine zu Kollisionen kommen, obwohl die Simulation fehlerfrei war. Im Stand der Technik ist weiterhin bekannt, die Verfahrbewegung der verfahrbaren Elemente in einem Einfahrvorgang manuell mit langsamer Geschwindigkeit auszuführen. In diesem Fall wird zumindest viel Zeit benötigt. Weiterhin kann es infolge von Unachtsamkeit oder schlechter Einsehbarkeit dennoch zu Kollisionen kommen.

Im Stand der Technik ist weiterhin bekannt, die Elemente der Maschine zu modellieren und die modellierte Verfahrbewegung der verfahrbaren Elemente der Maschine parallel zur realen Verfahrbewegung der verfahrbaren Elemente der Maschine vorausschauend auf Kollision zu prüfen. Diese Vorgehensweise wird in der Regel innerhalb der Steuereinrichtung der Maschine durchgeführt. Sie "lebt" von der Genauigkeit und Vollständigkeit des in der Steuereinrichtung hinterlegten Modells. Soweit es die vom Hersteller der Maschine verwendete Modellierung betrifft, ist diese Modellierung meist recht gut. Oftmals müssen jedoch auch vom Anwender zusätzliche Elemente modelliert werden und innerhalb des Modells jederzeit aktuell gehalten werden. Beispiele derartiger Elemente sind bei einer Werkzeugmaschine Werkzeughalterungen, Werkzeuge, Werkstücke, Werkstückhalterungen, Messvorrichtungen und andere mehr. Bei der Vorgabe derartiger Elemente treten öfters Fehler auf.

Die Aufgabe der vorliegenden Erfindung besteht darin, Möglichkeiten zu schaffen, mittels derer Kollisionen nahezu mit Sicherheit vermieden werden können.

Die Aufgabe wird durch ein Überwachungsverfahren mit den Merkmalen des Anspruchs 1 gelöst. Vorteilhafte Ausgestaltungen des Überwachungsverfahrens sind Gegenstand der abhängigen Ansprüche 2 bis 13.

Erfindungsgemäß wird ein Überwachungsverfahren der eingangs genannten Art dadurch ausgestaltet,
- wobei eine zweite Überwachungseinrichtung aufgrund der Ausführung eines zweiten Computerprogramms
   -- ebenfalls prüft, ob eine Kollision eines verfahrbaren Elements der Maschine mit einem anderen verfahrbaren Element der Maschine oder mit einem ortsfest angeordneten Element droht, und
   -- je nachdem, ob sie die Gefahr einer Kollision erkennt oder nicht, unabhängig von der ersten Überwachungseinrichtung ebenfalls korrigierend in die Ansteuerung der Antriebe eingreift oder nicht eingreift oder eine Alarmmeldung an einen Bediener der zweiten Überwachungseinrichtung ausgibt oder nicht ausgibt, und
- dass das erste und das zweite Computerprogramm diversitär ausgebildet sind.

Aufgrund der diversitären Ausbildung der Computerprogramme - also eines voneinander verschiedenen Programmcodes - ist mit an Sicherheit grenzender Wahrscheinlichkeit gewährleistet, dass einzelne Fehlfunktionen, die bei der Ausführung eines der beiden Computerprogramme auftreten und dadurch dazu führen würden, dass eine drohende Kollision nicht erkannt wird, bei dem anderen der beiden Computerprogramme nicht auftreten. Dadurch ist gewährleistet, dass zumindest dieses andere Computerprogramm die Kollision rechtzeitig erkennt und somit Maßnahmen zur Vermeidung der Kollision einleiten kann bzw. eine entsprechende Alarmmeldung ausgeben kann.

Die beiden Computerprogramme können beispielsweise von verschiedenen Programmierern (oder Gruppen von Programmierern) entwickelt werden. Es ist auch möglich, die Computerprogramme bei ihrem späteren Ablauf getrennt zu parametrieren. Auch ist es möglich, die Parameter den Computerprogrammen auf unterschiedliche Art und Weise zuzuführen. Auch unterschiedliche Reaktionen beim Erkennen einer Kollision bzw. der Gefahr einer Kollision sind möglich.

Hardwarefehler, d.h. ein Versagen der vorhandenen Hardware, auf denen die Computerprogramme ausgeführt werden, sind sehr selten. Es kann daher tolerierbar sein, die beiden Computerprogramme mittels ein und derselben Überwachungseinrichtung auszuführen, dass also die erste Überwachungseinrichtung und die zweite Überwachungseinrichtung ein und dieselbe Einrichtung sind. Vorzugsweise sind die erste und die zweite Überwachungseinrichtung jedoch voneinander verschiedene Einrichtungen. In diesem Fall können die erste Überwachungseinrichtung und die zweite Überwachungseinrichtung insbesondere ihrerseits selbst diversitär aufgebaut sein.

Im Falle voneinander verschiedener Einrichtungen kann beispielsweise eine der beiden Überwachungseinrichtungen mit der Steuereinrichtung der Maschine identisch sein. Die andere Überwachungseinrichtung kann in diesem Fall als mit der Steuereinrichtung der Maschine datentechnisch verbundener Industrie-PC ausgebildet sein.

Es ist möglich, dass die erste Überwachungseinrichtung die Prüfung, ob eine Kollision eines verfahrbaren Elements der Maschine mit einem anderen verfahrbaren Element der Maschine oder mit einem ortsfest angeordneten Element droht, basierend auf einem ersten Modell der Maschine ausführt. In diesem Fall prüft die erste Überwachungseinrichtung anhand eines ersten Modells der Maschine in Verbindung mit einer unmittelbar vorhergehenden oder unmittelbar bevorstehenden Sollverfahrbewegung der verfahrbaren Elemente der Maschine oder einer unmittelbar vorhergehenden Istverfahrbewegung des verfahrbaren Elemente der Maschine, ob eine derartige Kollision droht. Die gleiche Vorgehensweise ist prinzipiell auch für die zweite Überwachungseinrichtung möglich. Es ist also möglich, dass die zweite Überwachungseinrichtung anhand eines zweiten Modells der Maschine in Verbindung mit der unmittelbar vorhergehenden oder unmittelbar bevorstehenden Sollverfahrbewegung der verfahrbaren Elemente der Maschine oder der unmittelbar vorhergehenden Istverfahrbewegung der verfahrbaren Elemente der Maschine prüft, ob eine derartige Kollision droht. Die beiden Modelle sind mittels jeweiliger Modellparameter parametrierbar. Um die Diversität zu optimieren, ist in diesem Fall jedoch vorzugsweise vorgesehen, dass die zweiten Modellparameter dem zweiten Modell unabhängig von der Vorgabe der ersten Modellparameter an das erste Modell vorgegeben werden.

Es ist möglich, dass die ersten oder die zweiten Modellparameter dem ersten oder dem zweiten Modell automatisiert aus einer ersten Parameterquelle vorgegeben werden. "Automatisiert" bedeutet hierbei, dass zwar eine Person die erste Parameterquelle spezifiziert, mit dieser Spezifizierung aber mit einem Schlag eine größere Anzahl an ersten oder zweiten Modellparametern festgelegt wird. In diesem Fall kann vorgesehen sein, dass nach dem Vorgeben der ersten oder zweiten Modellparameter an das erste oder zweite Modell eine Vorgabe der zweiten oder ersten Modellparameter an das zweite oder erste Modell aus der ersten Parameterquelle blockiert wird. Dadurch ist gewährleistet, dass eine doppelte automatisierte Vorgabe aus der gleichen ersten Parameterquelle vermieden wird. Eine automatisierte Vorgabe sowohl der ersten als auch der zweiten Modellparameter ist zwar prinzipiell möglich, aber nicht aus der gleichen ersten Parameterquelle.

Die Parametrierung mit den ersten und zweiten Modellparametern erfolgt durch den Hersteller der Maschine. Beispiele derartiger Parameter sind bei einer Werkzeugmaschine insbesondere die einzelnen Elemente der Werkzeugmaschine, insbesondere die verfahrbaren Elemente der lagegeregelten Achsen und deren Verkettung miteinander ("die Kinematik der Werkzeugmaschine") sowie ein Teil der ortsfesten Elemente der Werkzeugmaschine. Die ersten und zweiten Modellparameter können später vom Anwender der Werkzeugmaschine nicht mehr geändert werden.

Auch der Anwender der Werkzeugmaschine muss die Modelle in gewissem Umfang parametrieren können. Beispiele derartiger Parameter sind im Falle einer Werkzeugmaschine die Geometrien von Spannvorrichtungen, mittels derer das Werkstück gehalten wird, das Werkstück selbst, nachträglich im Arbeitsraum angeordnete Messeinrichtungen, welches Werkzeug verwendet wird, ob und gegebenenfalls welche Werkzeugverlängerungen oder Werkzeughalter verwendet werden und dergleichen mehr. Eine derartige Parametrierung durch den Anwender der Maschine kann dadurch implementiert sein, dass das erste Modell zusätzlich zu den ersten Modellparametern mittels erster Setup-Parameter parametrierbar ist und das zweite Modell zusätzlich zu den zweiten Modellparametern mittels zweiter Setup-Parameter parametrierbar ist. Analog zu den ersten und zweiten Modellparametern ist zur Optimierung der Diversität jedoch vorzugsweise vorgesehen, dass die zweiten Setup-Parameter dem zweiten Modell unabhängig von der Vorgabe der ersten Setup-Parameter an das erste Modell vorgegeben werden.

Analog zu den ersten und zweiten Modellparametern ist es möglich, dass die ersten oder die zweiten Setup-Parameter dem ersten oder dem zweiten Modell automatisiert aus einer zweiten Parameterquelle vorgegeben werden. "Automatisiert" bedeutet hierbei, dass zwar eine Person die zweite Parameterquelle spezifiziert, mit dieser Spezifizierung aber mit einem Schlag eine größere Anzahl an ersten oder zweiten Setup-Parameter festgelegt wird. In diesem Fall kann vorgesehen sein, dass nach dem Vorgeben der ersten oder zweiten Setup-Parameter an das erste oder zweite Modell eine Vorgabe der zweiten oder ersten Setup-Parameter an das zweite oder erste Modell aus der zweiten Parameterquelle blockiert wird. Dadurch ist gewährleistet, dass eine doppelte automatisierte Vorgabe der Setup-Parameter aus der gleichen zweiten Parameterquelle vermieden wird. Eine automatisierte Vorgabe sowohl der ersten als auch der zweiten Setup-Parameter ist zwar prinzipiell möglich, aber nicht aus der gleichen zweiten Parameterquelle.

Wie bereits erwähnt, kann die Überwachung durch beide Überwachungseinrichtungen modellgestützt sein. Dies ist aber nicht zwingend erforderlich. Insbesondere ist alternativ auch möglich, eine der beiden Überwachungseinrichtungen modellgestützt arbeitet und die andere Überwachungseinrichtung anhand von sensorisch erfassten Signalen ohne Verwendung eines Modells der Maschine Abstände der verfahrbaren und ortsfesten Elemente der Maschine voneinander ermittelt und auf Gefahr einer Kollision erkennt, wenn die Abstände der verfahrbaren und ortsfesten Elemente voneinander vorgegebene Minimalabstände erreichen oder unterschreiten. Es ist auch möglich, dass beide Überwachungseinrichtungen ihre Prüfung anhand von sensorisch erfassten Signalen ohne Verwendung eines Modells der Maschine vornehmen.

Es ist möglich, dass die erste und die zweite Überwachungseinrichtung im Rahmen der Prüfung, ob die Gefahr einer Kollision droht, ausschließlich die von ihnen ermittelten oder erfassten Abstände der Elemente der Maschine voneinander auswerten. Alternativ ist es möglich, dass die erste und/oder die zweite Überwachungseinrichtung im Rahmen dieser Prüfung eine Verfahrgeschwindigkeit der Elemente der Maschine und/oder Geschwindigkeiten, mit welchen sich die Abstände verringern, berücksichtigen.

Es ist möglich, dass die erste und die zweite Überwachungseinrichtung zum korrigierenden Eingreifen in die Ansteuerung der Antriebe das gleiche Element ansteuern, beispielsweise beide entsprechende Signale an die Steuereinrichtung der Maschine übermitteln. Alternativ ist es möglich, dass die erste und die zweite Überwachungseinrichtung zu diesem Zweck voneinander verschiedene Elemente von Signalketten zwischen der Steuereinrichtung der Maschine und die verfahrbaren Elemente verfahrenden Elektromotoren ansteuern. Insbesondere ist es möglich, dass eine der beiden Überwachungseinrichtungen zu diesem Zweck ein erstes Korrektursignal an die Steuereinrichtung der Maschine übermittelt und die andere Überwachungseinrichtung zweite Korrektursignale an der Steuereinrichtung nachgeordnete, den Elektromotoren hingegen vorgeordnete Antriebssteuerungen der Maschine übermittelt.

Die Aufgabe wird weiterhin durch eine aus einem ersten und einem zweiten Computerprogramm bestehende Gruppe von Computerprogrammen mit den Merkmalen des Anspruchs 14 gelöst. Das erste Computerprogramm ist so wie obenstehend erläutert ausgebildet. Das zweite Computerprogramm umfasst zweiten Maschinencode, der von einer zweiten Überwachungseinrichtung unmittelbar abarbeitbar ist, wobei die Abarbeitung des zweiten Maschinencodes durch die zweite Überwachungseinrichtung bewirkt, dass die zweite Überwachungseinrichtung ein Überwachungsverfahren mit den erfindungsgemäßen Merkmalen ausführt. Das erste und das zweite Computerprogramm sind hierbei diversitär ausgebildet.

Die Aufgabe wird weiterhin durch eine aus einer aus einer ersten und einer zweiten Überwachungseinrichtung bestehende Gruppe von Überwachungseinrichtungen mit den Merkmalen des Anspruchs 15 gelöst. Die erste Überwachungseinrichtung ist so wie obenstehend erläutert ausgebildet. Die zweite Überwachungseinrichtung ist mit einem zweiten erfindungsgemäßen Computerprogramm programmiert, so dass die zweite Überwachungseinrichtung im Betrieb ein Überwachungsverfahren mit den erfindungsgemäßen Merkmalen ausführt.

Vorzugsweise sind die erste und die zweite Überwachungseinrichtung jedoch voneinander verschiedene Einrichtungen. Insbesondere können sie diversitär ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine einschließlich zugehöriger Komponenten,
- FIG 2: ein Ablaufdiagramm,
- FIG 3: ein Modell,
- FIG 4: ein Ablaufdiagramm,
- FIG 5: ein Modell,
- FIG 6: ein Ablaufdiagramm,
- FIG 7: ein Ablaufdiagramm,
- FIG 8: ein Ablaufdiagramm und
- FIG 9: Signalketten.

Die vorliegende Erfindung wird nachstehend in Verbindung mit einer Werkzeugmaschine erläutert. Sie ist aber nicht auf Werkzeugmaschinen beschränkt. Die vorliegende Erfindung kann vielmehr allgemein bei Maschinen angewendet werden, bei denen Elemente durch Antriebe verfahren werden. Beispiele derartiger Maschinen sind Roboter, Produktionsmaschinen und andere mehr. Die vorliegende Erfindung wird nachstehend weiterhin in Verbindung mit einer Verfahrbewegung von Elementen der Werkzeugmaschine mit lagegeregelten Antrieben erläutert. Sie ist aber nicht auf eine Verfahrbewegung von Elementen durch lagegeregelte Antriebe beschränkt. Auch wenn nachstehend die vorliegende Erfindung stets in Verbindung mit einer Werkzeugmaschine und lagegeregelten Antrieben erläutert wird, gelten die Ausführungen auch für andere Maschinen und auch für nicht lagegeregelte Antriebe.

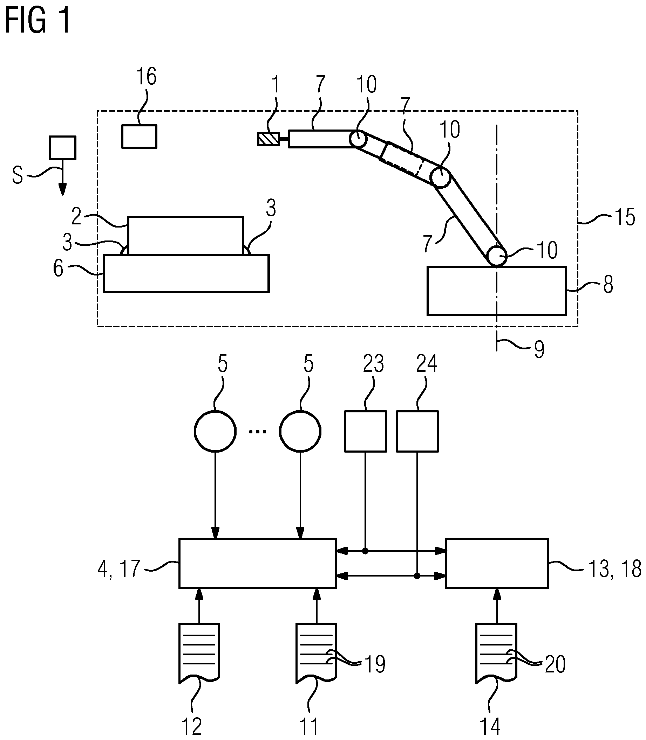

Bei einer Werkzeugmaschine soll in der Regel mittels eines Werkzeugs 1 ein Werkstück 2 bearbeitet werden. Zu diesem Zweck wird das Werkstück 2 in einer Werkstückhalterung 3 eingespannt. Sodann steuert eine Steuereinrichtung 4 eine Anzahl von lagegeregelten Antrieben 5 der Werkzeugmaschine, so dass das Werkzeug 1 relativ zum Werkstück 2 entlang einer vordefinierten Bahn verfahren wird. Entlang der Bahn wird das Werkzeug 1 somit zumindest translatorisch positioniert. In vielen Fällen wird das Werkzeug 1 zusätzlich auch rotatorisch orientiert. Weiterhin wird von der Steuereinrichtung 4, soweit erforderlich, das Werkzeug 1 entsprechend angesteuert, damit es die erforderliche Bearbeitung vornimmt. Das Werkzeug 1 ist beispielsweise oftmals ein rotierendes Werkzeug, beispielsweise ein Fräser oder ein Bohrer. Zum Rotieren des Werkzeugs 1 ist ein weiterer Antrieb vorhanden, der ebenfalls von der Steuereinrichtung 4 angesteuert wird. Es ist möglich, dass dieser Antrieb ist nicht lagegeregelt ist, sondern nur drehzahlgeregelt ist bzw. drehzahlgeregelt betrieben wird. Es ist aber auch ein lagegeregelter Betrieb möglich. Dieser Antrieb ist im Rahmen der vorliegenden Erfindung von untergeordneter Bedeutung und daher in FIG 1 (und auch den anderen FIG) nicht mit dargestellt. Es sind auch andere Verfahrbewegungen möglich, beispielsweise manuell gesteuerte Verfahrbewegungen oder zwar automatisiert ausgeführte Verfahrbewegungen, die aber nicht mit einer Bearbeitung des Werkstücks 2 durch das Werkzeug 1 korrespondieren.

Die lagegeregelten Antriebe 5 können nach Bedarf auf verfahrbare Elemente der Werkzeugmaschine wirken. Beispielsweise kann ein Werkstücktisch 6, auf dem die Werkstückhalterungen 3 angeordnet ist, rotiert werden. In diesem Fall werden indirekt über die Verfahrbewegung des Werkzeugtisches 6 auch die Werkstückhalterungen 3 und das Werkstück 2 mit verfahren. Alternativ oder zusätzlich können Ausleger 7 verfahren werden, wobei am letzten Ausleger 7 das Werkzeug 1 befestigt ist. In diesem Fall werden indirekt über die Verfahrbewegungen der Ausleger 7 auch das Werkzeug 1 und eine nicht dargestellte Werkzeughalterung mit verfahren. Rein beispielhaft sind drei Ausleger 7 vorhanden, wobei ebenfalls rein beispielhaft ein Grundelement 8, an dem der nächste Ausleger 7 befestigt ist, um die Vertikale 9 rotierbar ist, die Ausleger 7 jeweils in einem Gelenk 10 verschwenkbar sind und zusätzlich der mittlere Ausleger 7 in seiner Länge verstellbar ist. Diese Konfiguration ist jedoch rein beispielhaft und wurde nur gewählt, um die Erfindung anschaulich erläutern zu können.

Die Steuereinrichtung 4 ist in der Regel softwareprogrammierbar. Ihre prinzipielle Wirkungsweise wird durch ein Systemprogramm 11 bestimmt. Die Abarbeitung des Systemprogramms 11 kann unter anderem bewirken, dass die Steuereinrichtung 4 ein Teileprogramm 12 abarbeitet, das seinerseits eine Verfahrbewegung des Werkzeugs 1 relativ zum Werkstück 2 ("Bahn") festlegt und definiert. Die Steuereinrichtung 4 implementiert zumindest die Funktionalität einer numerischen Steuerung (CNC). In manchen Fällen implementiert sie zusätzlich die Funktionalität einer speicherprogrammierbaren Steuerung (SPS oder PLC = programmable logic controller). Mittels einer speicherprogrammierbaren Steuerung ist ebenfalls ein Verfahren von verfahrbaren Elementen der Werkzeugmaschine möglich. Derartige Verfahrbewegungen erfolgen jedoch - im Gegensatz zur Verfahrbewegung des Werkzeugs 1 relativ zum Werkstück 2 - nicht lagegeregelt.

Die Steuereinrichtung 4 ist oftmals mit einer weiteren Recheneinrichtung 13 datentechnisch verbunden, beispielsweise einem Industrie-PC. Der Industrie-PC 13 ist mit einem weiteren Computerprogramm 14 programmiert.

Es soll vermieden werden, dass Kollisionen auftreten, beispielsweise eine Kollision des mittleren Auslegers 7 mit dem Grundelement 8, der Werkstückhalterung 3 oder einem anderen verfahrbaren Element der Werkzeugmaschine oder einem anderen, ortsfest angeordneten Element 16. Das ortsfest angeordneten Element kann insbesondere in einem Arbeitsraum 15 der Werkzeugmaschine angeordnet sein. Allgemein soll eine Kollision von kollisionsgefährdeten Körpern miteinander vermieden werden. Dies gilt sowohl während der Verfahrbewegung des Werkzeugs 1 relativ zum Werkstück 2 als auch während anderer Zeiträume. Zu diesem Zweck sind (mindestens) zwei Überwachungseinrichtungen 17, 18 vorhanden. Die Überwachungseinrichtungen 17, 18 können im Einzelfall gleichartig aufgebaut sein. Im Regelfall sind sie aber diversitär ausgebildet. Beispielsweise kann eine der beiden Überwachungseinrichtungen 17, 18 mit der Steuereinrichtung 4 der Werkzeugmaschine identisch sein und die andere der beiden Überwachungseinrichtungen 17, 18 dem Industrie-PC 13 entsprechen. Alternativ kann es sich um andere Einrichtungen handeln, d.h um Einrichtungen, die sowohl von der Steuereinrichtung 4 als auch vom Industrie-PC 13 verschiedene Einrichtungen sind. Nachfolgend wird die Überwachungseinrichtung 17 als erste Überwachungseinrichtung bezeichnet, die Überwachungseinrichtung 18 als zweite Überwachungseinrichtung. Weiterhin wird angenommen, dass die Überwachungseinrichtung 17 mit der Steuereinrichtung 4 der Werkzeugmaschine identisch ist und die Überwachungseinrichtung 18 als Industrie-PC 13 ausgebildet ist. Diese Zuordnungen sind jedoch rein beispielhaft und könnten auch anders sein.

Aufgrund der vorgenommenen Zuordnung entspricht das Systemprogramm 11 einem ersten Computerprogramm, das Computerprogramm 14 einem zweiten Computerprogramm. Beide Computerprogramme 11, 14 umfassen einen jeweiligen Maschinencode 19, 20, der von der jeweiligen Überwachungseinrichtung 17, 18 unmittelbar abarbeitbar ist. Die Abarbeitung des jeweiligen Maschinencodes 19, 20 durch die jeweilige Überwachungseinrichtung 17, 18 bewirkt, dass die jeweilige Überwachungseinrichtung 17, 18 ein jeweiliges Teil-Überwachungsverfahren für die Verfahrbewegung der verfahrbaren Elemente 1 bis 3, 6 bis 8, 10 ausführt. Zusammen führen die Überwachungseinrichtungen 17, 18 dadurch ein Gesamt-Überwachungsverfahren für die Verfahrbewegung der Elemente 1, bis 3, 6 bis 8, 10 aus. Die beiden Teil-Überwachungsverfahren werden nachstehend näher erläutert.

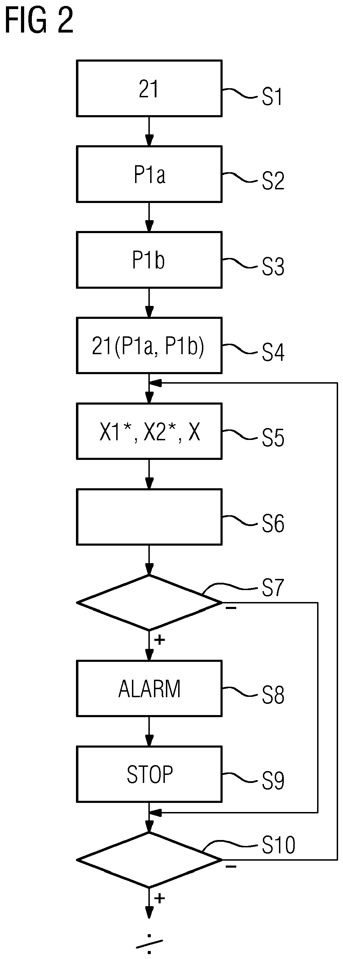

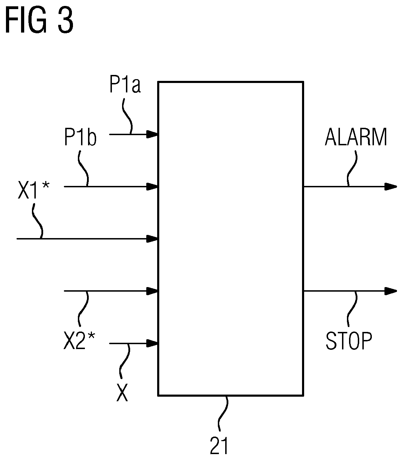

FIG 2 zeigt die Wirkungsweise des ersten Computerprogramms 11 (soweit es das erfindungsgemäße Überwachungsverfahren betrifft). Gemäß FIG 2 (siehe ergänzend FIG 3) implementiert die erste Überwachungseinrichtung 17 in einem Schritt S1 ein Modell 21 der Werkzeugmaschine. Das Modell 21 wird nachfolgend als erstes Modell bezeichnet. Das erste Modell 21 modelliert insbesondere die vorhandenen mechanischen Elemente 1 bis 3, 6 bis 8, 10 der Werkzeugmaschine und deren Verfahrbewegungen. Die modellierten Elemente 1 bis 3, 6 bis 8, 10 umfassen beispielsweise das Werkzeug 1, die Werkzeughalterung, das Werkstück 2, die Werkstückhalterungen 3, den Werkstücktisch 6, die Ausleger 7, das Grundelement 8 und die Gelenke 10. Zusätzlich werden nach Bedarf andere verfahrbare Elemente und auch ortsfest angeordnete Elemente 16 der Werkzeugmaschine modelliert. Die Modellierung als solche ist Fachleuten allgemein bekannt und vertraut.

Zur korrekten Modellierung werden der ersten Überwachungseinrichtung 17 in der Regel in einem Schritt S2 erste Modellparameter P1a zugeführt. Die ersten Modellparameter P1a werden der ersten Überwachungseinrichtung 17 in der Regel von einem Hersteller der Werkzeugmaschine zugeführt. Sie sind von einem Anwender oder Bediener der Werkzeugmaschine in der Regel nicht änderbar. Beispielsweise können die ersten Modellparameter P1a in einem Speicher (in den FIG nicht dargestellt) der ersten Überwachungseinrichtung 17 hinterlegt werden, auf den der schreibende Zugriff nur nach Vorgabe eines vorbestimmten Passworts möglich ist. Mittels der ersten Modellparameter P1a werden diejenigen Elemente der Werkzeugmaschine modelliert, mit denen die Werkzeugmaschine vom Hersteller der Werkzeugmaschine versehen wird. Beispiele derartiger Komponenten sind insbesondere der Werkstücktisch 6, das Grundelement 8, die Ausleger 7 und die Gelenke 10.

In einem Schritt S3 werden der ersten Überwachungseinrichtung 17 erste Setup-Parameter P1b zugeführt. Die ersten Setup-Parameter P1b werden der ersten Überwachungseinrichtung 17 in der Regel von dem Anwender oder Bediener der Werkzeugmaschine zugeführt. Die ersten Setup-Parameter P1b sind in der Regel vom Anwender oder Bediener der Werkzeugmaschine jederzeit änderbar. Mittels der ersten Setup-Parameter P1b werden diejenigen Elemente der Werkzeugmaschine modelliert, mit denen die Werkzeugmaschine vom Anwender oder Bediener der Werkzeugmaschine versehen wird. Beispiele derartiger Elemente sind oftmals die Werkzeughalterung, die Werkstückhalterung 3, das Werkstück 2, etwaige Messeinrichtungen und andere mehr. Der Anwender kann auch festlegen, welches Werkzeug 1 jeweils verwendet wird.

In einem Schritt S4 parametriert die erste Überwachungseinrichtung 17 das erste Modell 21 entsprechend den vorgegebenen ersten Modellparametern P1a und ersten Setup-Parametern P1b.

In einem Schritt S5 nimmt die erste Überwachungseinrichtung 17 Lagewerte X1*, X2*, X entgegen. In einem Schritt S6 ermittelt die erste Überwachungseinrichtung 17 anhand des ersten Modells 21 der Werkzeugmaschine in Verbindung mit den entgegengenommenen Lagewerten X1*, X2*, X die sich ergebenden Abstände der modellierten Elemente 1 bis 3, 6 bis 8, 10, 16 der Werkzeugmaschine voneinander. Sie berücksichtigt hierbei die ersten Modellparameter P1a und die ersten Setup-Parameter P1b. In Auswertung des Schrittes S6 prüft die erste Überwachungseinrichtung 17 in einem Schritt S7, ob eine Kollision eines Elements 1 bis 3, 6 bis 8, 10, 16 der Werkzeugmaschine mit einem anderen Element 1 bis 3, 6 bis 8, 10, 16 der Werkzeugmaschine droht.

Die Prüfung, ob eine Kollision droht, ist Fachleuten allgemein bekannt. Beispielsweise kann auf Kollision bzw. drohende Kollision erkannt werden, wenn Abstände der Elemente 1 bis 3, 6 bis 8, 10, 16 usw. voneinander vorbestimmte Minimalabstände unterschreiten. Eine Ausnahme kann hierbei für den Abstand des Werkzeugs 1 vom Werkstück 2 gelten. Insbesondere soll durch das Werkzeug 1 das Werkstück 2 oftmals materialabtragend bearbeitet werden. In diesem Fall ist in der Regel ein Kontakt des Werkzeugs 1 mit dem Werkstück 2 erforderlich. Bezüglich des Abstands zwischen Werkzeug 1 und Werkstück 2 kann beispielsweise geprüft werden, an welcher Stelle gegebenenfalls ein Kontakt zwischen Werkzeug 1 und Werkstück 2 auftritt, ob an dieser Stelle eine Bearbeitung des Werkstücks 2 durch das Werkzeug 1 erfolgen soll und ob bestimmte Betriebsparameter der Werkzeugmaschine wie beispielsweise die Drehzahl des Werkzeugs 1 und die Vorschubgeschwindigkeit des Werkzeugs 1 relativ zum Werkstück 2 vorbestimmte technologische Parameter erfüllen. In diesem Fall wird trotz einer "Kollision" des Werkzeugs 1 mit dem Werkstück nicht auf Kollision erkannt, da genau diese Bearbeitung ja erfolgen soll. Diese Ausnahme gilt aber, wie bereits erwähnt, nur für den Kontakt zwischen Werkzeug 1 und Werkstück 2. Die Berücksichtigung der Bearbeitung des Werkstücks 2 durch das Werkzeug 1 im Rahmen der Kollisionsprüfung ist Fachleuten ebenfalls allgemein bekannt. Auch ist Fachleuten allgemein bekannt, die Beschreibung des Werkstücks 2 innerhalb des ersten Modell 21 entsprechend der Bearbeitung durch das Werkzeug 1 kontinuierlich nachzuführen und zu aktualisieren.

Wenn eine bevorstehende Kollision erkannt wird, geht die erste Überwachungseinrichtung 17 zu einem Schritt S8 über. Im Schritt S8 gibt die erste Überwachungseinrichtung 17 eine Alarmmeldung aus. Beispielsweise kann die Alarmmeldung an den Anwender oder Bediener der Werkzeugmaschine ausgegeben werden. In einem nachfolgenden Schritt S9 greift die erste Überwachungseinrichtung 17 korrigierend in die Ansteuerung der Antriebe 5 ein. Hierauf wird später noch näher eingegangen werden. Anderenfalls überspringt die erste Überwachungseinrichtung 17 die Schritte S8 und S9. In manchen Fällen ist ausschließlich der Schritt S8 vorhanden, in manchen Fällen ausschließlich der Schritt S9. In wieder anderen Fällen sind sowohl der Schritt S8 als auch der Schritt S9 vorhanden.

In einem Schritt S10 prüft die erste Überwachungseinrichtung 17, ob eine Beendigungsbedingung eingetreten ist. Wenn dies nicht der Fall ist, geht die erste Überwachungseinrichtung 17 zum Schritt S5 zurück. Bei der erneuten Ausführung des Schrittes S5 nimmt die erste Überwachungseinrichtung 17 die nächsten Lagewerte X1*, X2*, X entgegen. Anderenfalls ist die Vorgehensweise von FIG 2 entweder beendet oder die erste Überwachungseinrichtung geht zum Schritt S3 über, in dem ihr - beispielsweise aufgrund eines Wechsels des Werkzeugs 1 oder des Werkstücks 2 - die ersten Setup-Parameter P1b neu vorgegeben werden.

Es ist möglich, dass die Lagewerte X1*, X2*, X des Schrittes S5 Lageistwerte X sind, die auf einen bestimmten Zeitraum vor dem betrachteten Zeitpunkt und insbesondere unmittelbar vor dem betrachteten Zeitpunkt bezogen sind. In diesem Fall müssen die Schritte S5 bis S9 in Echtzeit zusammen mit der tatsächlichen Ansteuerung der lagegeregelten Antriebe 5 ausgeführt werden. Wenn die Gefahr einer Kollision erkannt wird, muss als Reaktion unmittelbar in die Ansteuerung der Antriebe 5 eingegriffen werden.

Alternativ ist es möglich, dass die Lagewerte X1*, X2*, X des Schrittes S5 Lagesollwerte X1* sind, die auf einen bestimmten Zeitraum vor dem betrachteten Zeitpunkt und insbesondere unmittelbar vor dem betrachteten Zeitpunkt bezogen sind. Ebenso ist es möglich, dass die Lagewerte X1*, X2*, X des Schrittes S5 Lagesollwerte X2* sind, die auf einen bestimmten Zeitraum nach dem betrachteten Zeitpunkt und insbesondere unmittelbar nach dem betrachteten Zeitpunkt bezogen sind. Auch in diesen Fällen können die Schritte S5 bis S9 in Echtzeit zusammen mit der tatsächlichen Ansteuerung der lagegeregelten Antriebe 5 ausgeführt werden. Wenn dies der Fall ist und die Gefahr einer Kollision erkannt wird, muss als Reaktion ebenfalls unmittelbar in die Ansteuerung der Antriebe 5 eingegriffen werden. Alternativ ist es im Falle der Verwertung von Lagesollwerten X1*, X2* jedoch ebenfalls möglich, die Schritte S5 bis S9 in zeitlicher Entkopplung von der tatsächlichen Ansteuerung der lagegeregelten Antriebe 5 auszuführen. In diesem Fall ist es ausreichend, wenn als Reaktion auf das Erkennen der Gefahr einer Kollision die Alarmmeldung ausgegeben wird.

Unabhängig von der ersten Überwachungseinrichtung 17 führt die zweite Überwachungseinrichtung 18 ebenfalls eine Prüfung durch, ob eine Kollision eines Elements 1 bis 3, 6 bis 8, 10, 16 der Werkzeugmaschine mit einem anderen Element 1 bis 3, 6 bis 8, 10, 16 der Werkzeugmaschine droht. Je nachdem, ob die zweite Überwachungseinrichtung 18 die Gefahr einer Kollision erkennt oder nicht, reagiert die zweite Überwachungseinrichtung 18 in analoger Weise. Insbesondere kann die zweite Überwachungseinrichtung 18 in dem Fall, dass eine Kollision eines Elements 1 bis 3, 6 bis 8, 10, 16 der Werkzeugmaschine mit einem anderen Element 1 bis 3, 6 bis 8, 10, 16 der Werkzeugmaschine droht, nach Bedarf eine Alarmmeldung ausgeben und/oder korrigierend in die Ansteuerung der Antriebe 5 eingreifen. Auch hier kann gegebenenfalls für die Bearbeitung des Werkstücks 2 durch das Werkzeug 1 eine "Kollision" zugelassen werden.

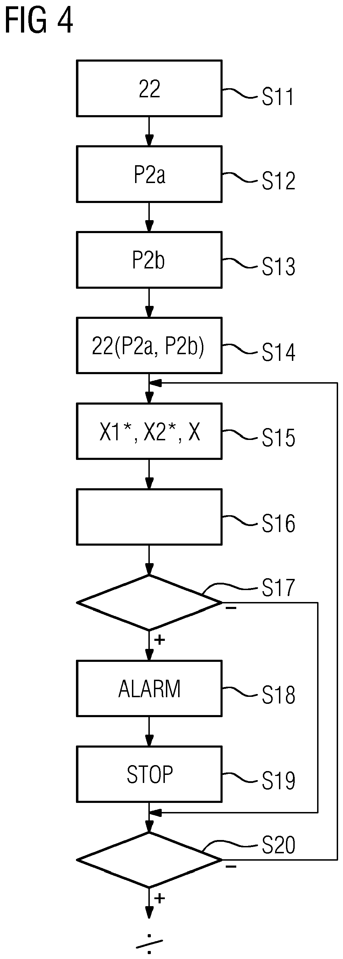

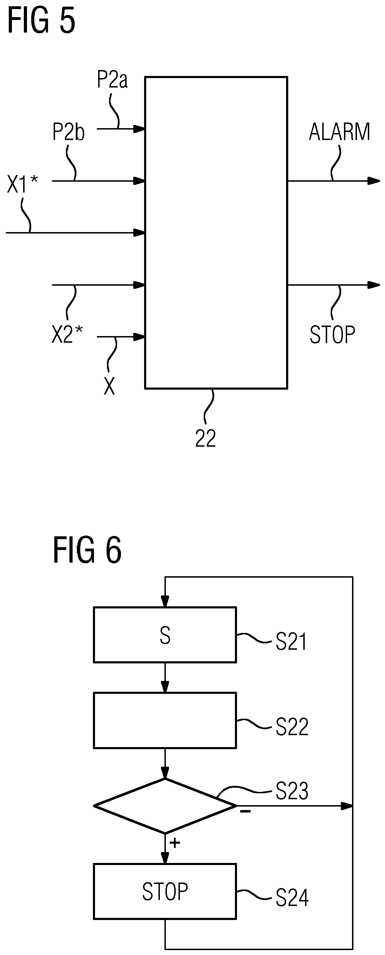

Beispielsweise ist es entsprechend der Darstellung in den FIG 4 und 5 möglich, dass die zweite Überwachungseinrichtung 18 in einem Schritt S11 ein zweites Modell 22 implementiert und in Schritten S12 bis S14 mit Modellparametern P2a und Setup-Parametern P2b parametriert und sodann in Schritten S15 bis S20 eine zur obenstehend in Verbindung mit den FIG 2 und 3 erläuterten Vorgehensweise äquivalente Vorgehensweise implementiert. Die Schritte S11 bis S20 können in funktionaler Hinsicht 1:1 mit den Schritten S1 bis S10 von FIG 2 korrespondieren.

Alternativ ist es möglich, dass die erste und/oder die zweite Überwachungseinrichtung 17, 18 ein Überwachungsverfahren ausführt, das nachfolgend in Verbindung mit FIG 6 näher erläutert wird. Das Überwachungsverfahren von FIG 6 wird hierbei in Verbindung mit der ersten Überwachungseinrichtung 17 erläutert. Es ist jedoch - sowohl alternativ als auch zusätzlich - auch bei der zweiten Überwachungseinrichtung 18 anwendbar.

Das Überwachungsverfahren von FIG 6 kann - im Gegensatz zum Überwachungsverfahren von FIG 2 bzw. 4 - nur während der Ansteuerung der Antriebe 5 durch die Steuereinrichtung 4 ausgeführt werden. Im Rahmen des Überwachungsverfahrens von FIG 6 werden mittels entsprechender Sensoren (siehe FIG 1) - beispielsweise Kameras oder Radarsendern und -empfängern - Signale S erfasst, welche die Elemente 1 bis 3, 6 bis 8, 10, 16 der Werkzeugmaschine zeigen. Die Signale S werden in einem Schritt S21 von der ersten Überwachungseinrichtung 17 unter Abarbeitung des zugehörigen Computerprogramms 11 entgegengenommen. In einem Schritt S22 ermittelt die erste Überwachungseinrichtung 17 anhand der sensorisch erfassten Signale S Abstände der Elemente 1 bis 3, 6 bis 8, 10, 16 der Werkzeugmaschine voneinander. Die Ermittlung des Schrittes S22 kann ohne Verwendung eines Modells der Werkzeugmaschine erfolgen. In einem Schritt S23 erkennt die erste Überwachungseinrichtung 17 auf Gefahr einer Kollision, wenn die Abstände der Elemente 1 bis 3, 6 bis 8, 10, 16 voneinander vorgegebene Minimalabstände erreichen oder unterschreiten. Auch hier kann wieder als Ausnahme eine gewünschte Bearbeitung des Werkstücks 2 durch das Werkzeug 1 zugelassen werden. Falls die erste Überwachungseinrichtung 17 im Schritt S23 auf Gefahr einer Kollision erkennt, geht sie zu einem Schritt S24 über, in dem sie korrigierend in die Ansteuerung der Antriebe 5 eingreift. Der Schritt S24 korrespondiert inhaltlich mit dem Schritt S9 von FIG 2.

Unabhängig davon, ob mittels der beiden Überwachungseinrichtungen 17, 18 ein Überwachungsverfahren gemäß FIG 2 bzw. FIG 4 oder ein Überwachungsverfahren gemäß FIG 6 implementiert wird, ist das zweite Computerprogramm 14 jedoch diversitär zum ersten Computerprogramm 11 ausgebildet. Die beiden Computerprogramme 11, 14 sind also unabhängig voneinander entwickelt worden und umfassen daher Maschinencode 19, 20, der voneinander verschiedene Algorithmen implementiert.

Insbesondere wenn mittels der ersten Überwachungseinrichtung 17 ein Überwachungsverfahren gemäß FIG 2 und mittels der zweiten Überwachungseinrichtung 18 ein Überwachungsverfahren gemäß FIG 4 realisiert wird, sind verschiedene Ausgestaltungen möglich.

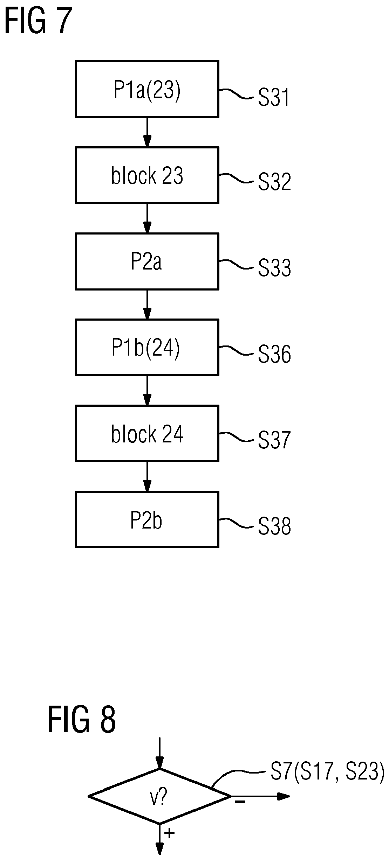

So ist es beispielsweise möglich, dass durch die Art und Weise, auf welche die Vorgabe der ersten und zweiten Modellparameter P1a, P2a erfolgt, gewährleistet wird, dass die zweiten Modellparameter P2a dem zweiten Modell 22 unabhängig von der Vorgabe der ersten Modellparameter P1a an das erste Modell 21 vorgegeben werden. Dies wird nachfolgend in Verbindung mit FIG 7 näher erläutert.

Gemäß FIG 7 erfolgt in einem Schritt S31 die Vorgabe der ersten Modellparameter P1a an das erste Modell 21. Die Vorgabe kann manuell erfolgen. Alternativ kann die Vorgabe aus einer ersten Parameterquelle 23 erfolgen. In diesem Fall muss eine Bedienperson nur die erste Parameterquelle 23 als solche spezifizieren. Die Übernahme der ersten Modellparameter P1a durch das erste Modell 21 erfolgt hingegen automatisch. Wenn die Vorgabe aus der ersten Parameterquelle 23 erfolgt, ist vorzugsweise zusätzlich ein Schritt S32 vorhanden. Im Schritt S32 wird eine Vorgabe der zweiten Modellparameter P2a an das zweite Modell 22 aus der ersten Parameterquelle 23 blockiert. In einem Schritt S33 erfolgt sodann die Vorgabe der zweiten Modellparameter P2a an das zweite Modell 22. Auch hier ist wieder eine manuelle Vorgabe möglich. Es ist auch eine automatisierte Vorgabe möglich. Diese Vorgabe kann jedoch nicht aus der ersten Parameterquelle 23 erfolgen, da diese im Schritt S32 gesperrt wurde. Es muss sich im Falle einer automatisierten Vorgabe also um eine andere Parameterquelle handeln. Diese andere Parameterquelle ist in den FIG nicht dargestellt.

In analoger Weise ist es möglich, dass durch die Art und Weise, auf welche die Vorgabe der ersten und zweiten Setup-Parameter P1b, P2b erfolgt, gewährleistet wird, dass die zweiten Setup-Parameter P2b dem zweiten Modell 22 unabhängig von der Vorgabe der ersten Modellparameter P1b an das erste Modell 21 vorgegeben werden. Auch dies wird nachfolgend in Verbindung mit FIG 7 näher erläutert.

Gemäß FIG 7 erfolgt in einem Schritt S36 die Vorgabe der ersten Setup-Parameter P1b an das erste Modell 21. Die Vorgabe kann manuell erfolgen. Alternativ kann die Vorgabe automatisiert aus einer zweiten Parameterquelle 24 erfolgen. Wenn die Vorgabe aus der zweiten Parameterquelle 24 erfolgt, ist vorzugsweise zusätzlich ein Schritt S37 vorhanden. Im Schritt S37 wird eine Vorgabe der zweiten Setup-Parameter P2b an das zweite Modell 22 aus der zweiten Parameterquelle 24 blockiert. In einem Schritt S38 erfolgt sodann die Vorgabe der zweiten Setup-Parameter P2b an das zweite Modell 22. Auch hier ist wieder eine manuelle Vorgabe möglich. Es ist auch eine automatisierte Vorgabe möglich. Diese Vorgabe kann jedoch nicht aus der zweiten Parameterquelle 24 erfolgen, da diese im Schritt S37 gesperrt wurde. Es muss sich im Falle einer automatisierten Vorgabe also um eine andere Parameterquelle handeln. Diese andere Parameterquelle ist in den FIG nicht dargestellt.

Obenstehend wurde erläutert, dass zuerst der ersten Überwachungseinrichtung 17 die ersten Modellparameter P1a und/oder die ersten Setup-Parameter P1b vorgegeben werden und erst danach der zweiten Überwachungseinrichtung 18 die zweiten Modellparameter P2a und/oder die zweiten Setup-Parameter P2b vorgegeben werden. Selbstverständlich ist auch die umgekehrte Reihenfolge möglich. Entscheidend ist lediglich, dass die Vorgabe der ersten und zweiten Modellparameter P1a, P2a unabhängig voneinander erfolgt und gegebenenfalls die erste Parameterquelle 23 nach ihrer Verwendung für die Vorgabe einer der Modellparameter P1a, P2a für die Vorgabe der später vorgegebenen Modellparameter P2a, P1a blockiert wird. Analoge Ausführungen gelten für die Vorgabe der ersten und der zweiten Setup-Parameter P1b P2b.

Es ist möglich, dass die erste Überwachungseinrichtung 17 im Rahmen der Prüfung des Schrittes S7 ausschließlich die ermittelten Abstände der verschiedenen Elemente 1 bis 3, 6 bis 8, 10, 16 der Werkzeugmaschine voneinander betrachtet. Alternativ ist es entsprechend der Darstellung in FIG 8 möglich, dass im Schritt S7 zusätzlich auch eine Verfahrgeschwindigkeit v der Elemente 1 bis 3, 6 bis 8, 10 der Werkzeugmaschine und/oder Geschwindigkeiten, mit welchen sich die Abstände der Elemente 1 bis 3, 6 bis 8, 10, 16 der Werkzeugmaschine voneinander verringern, berücksichtigt werden. Gleiche Ausführungen gelten für die Schritte S17 bzw. S23.

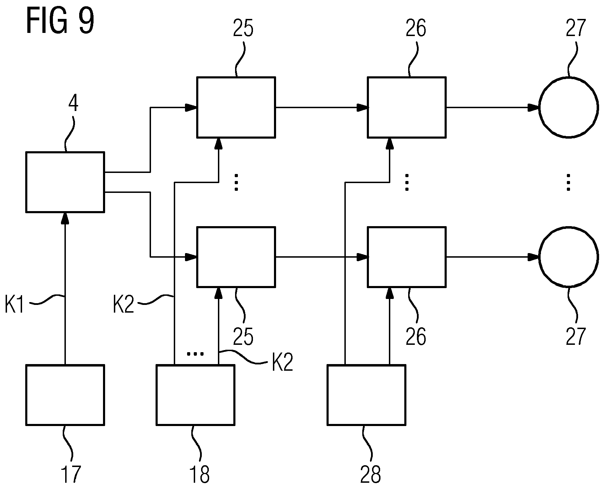

Die Steuereinrichtung 4 steuert die lagegeregelten Antriebe 5 über vorbestimmte Signalketten. Beispielsweise kann die Steuereinrichtung 4 entsprechend der Darstellung in FIG 9 Lage-, Drehzahl- oder Momentensollwerte an unterlagerte Antriebssteuerungen 25 ausgeben. Die Antriebssteuerungen 25 wiederum steuern Stromrichter 26 an, wobei die Stromrichter 26 ihrerseits Elektromotoren 27 über interne Stromsteller an eine elektrische Energieversorgung 28 anschalten. Durch die entsprechende Ansteuerung der Elektromotoren 27 wird das Werkzeug 1 relativ zum Werkstück 2 positioniert bzw. allgemein verfahren. Wenn beide Überwachungseinrichtungen 17, 18 korrigierend in die Ansteuerung der Antriebe 5 eingreifen, steuern die erste und die zweite Überwachungseinrichtung 17, 18 vorzugsweise entsprechend der Darstellung in FIG 9 voneinander verschiedene Elemente 4, 25, 26 dieser Signalketten (einschließlich der Grenzen dieser Signalketten) an. Beispielsweise kann eine der beiden Überwachungseinrichtungen 17, 18 ein erstes Korrektursignal K1 an die Steuereinrichtung 4 der Werkzeugmaschine übermitteln, während die andere der beiden Überwachungseinrichtungen 17, 18 zum gleichen Zweck Korrektursignale K2 an die Antriebssteuerungen 25 übermittelt.

Zusammengefasst betrifft die vorliegende Erfindung somit folgenden Sachverhalt:
Verfahrbare Elemente 1 bis 3, 6 bis 8, 10 einer Maschine werden von einer Steuereinrichtung 4 der Maschine durch Ansteuerung von Antrieben 5 der Maschine verfahren. Zum Überwachen der Verfahrbewegung der verfahrbaren Elemente 1 bis 3, 6 bis 8, 10 auf Kollision untereinander oder mit einem ortsfest angeordneten Element 16 prüfen mehrere Überwachungseinrichtungen 17, 18 unabhängig voneinander aufgrund der Ausführung eines jeweiligen Computerprogramms 11, 14, ob eine Kollision eines verfahrbaren Elements 1 bis 3, 6 bis 8, 10 der Werkzeugmaschine mit einem anderen verfahrbaren Element 1 bis 3, 6 bis 8, 10 der Werkzeugmaschine oder mit dem ortsfest angeordneten Element 16 droht. Je nachdem, ob die Überwachungseinrichtungen 17, 18 die Gefahr einer Kollision erkennen oder nicht, greifen sie unabhängig voneinander korrigierend in die Ansteuerung der Antriebe 5 ein oder nicht ein bzw. geben unabhängig voneinander eine Alarmmeldung aus oder nicht. Die beiden Computerprogramme 11, 14 sind diversitär ausgebildet.

Die vorliegende Erfindung weist viele Vorteile auf. Insbesondere wird durch die Verwendung diversitärer Computerprogramme 11, 14 mit an Sicherheit grenzender Wahrscheinlichkeit eine Kollision rechtzeitig erkannt. Es ist sogar - und zwar für beide Überwachungseinrichtungen 17, 18 unabhängig voneinander - eine Erweiterung um eine Funktionalität möglich, dass in einem Fall, dass eine Kollision nicht mehr verhindert werden kann, Maßnahmen ergriffen werden, die den auftretenden Schaden minimieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Überwachungsverfahren für eine Verfahrbewegung von verfahrbaren Elementen (1 bis 3, 6 bis 8, 10) einer Maschine, wobei die verfahrbaren Elemente (1 bis 3, 6 bis 8, 10) von einer Steuereinrichtung (4) der Maschine durch Ansteuerung von Antrieben (5) der Maschine verfahren werden,
- wobei eine erste Überwachungseinrichtung (17) aufgrund der Ausführung eines ersten Computerprogramms (11)
-- prüft, ob eine Kollision eines verfahrbaren Elements (1 bis 3, 6 bis 8, 10) der Werkzeugmaschine mit einem anderen verfahrbaren Element (1 bis 3, 6 bis 8, 10) der Werkzeugmaschine oder mit einem ortsfest angeordneten Element (16) droht, und
-- je nachdem, ob sie die Gefahr einer Kollision erkennt oder nicht, korrigierend in die Ansteuerung der Antriebe (5) eingreift oder nicht eingreift oder eine Alarmmeldung an einen Bediener der ersten Überwachungseinrichtung ausgibt oder nicht ausgibt,
**dadurch gekennzeichnet,**
- wobei eine zweite Überwachungseinrichtung (18) aufgrund der Ausführung eines zweiten Computerprogramms (14)
-- ebenfalls prüft, ob eine Kollision eines verfahrbaren Elements (1 bis 3, 6 bis 8, 10) der Maschine mit einem anderen verfahrbaren Element (1 bis 3, 6 bis 8, 10) der Maschine oder mit einem ortsfest angeordneten Element (16) droht, und
-- je nachdem, ob sie die Gefahr einer Kollision erkennt oder nicht, unabhängig von der ersten Überwachungseinrichtung (17) ebenfalls korrigierend in die Ansteuerung der Antriebe (5) eingreift oder nicht eingreift oder eine Alarmmeldung an einen Bediener der zweiten Überwachungseinrichtung ausgibt oder nicht ausgibt, und
- dass das erste und das zweite Computerprogramm (11, 14) diversitär ausgebildet sind.

2. Überwachungsverfahren nach Anspruch 1,
**dadurch gekennzeichnet,**
**dass** die erste Überwachungseinrichtung (17) und die zweite Überwachungseinrichtung (18) voneinander verschiedene Einrichtungen sind.

3. Überwachungsverfahren nach Anspruch 2,
**dadurch gekennzeichnet,**
**dass** die erste Überwachungseinrichtung (17) und die zweite Überwachungseinrichtung (18) diversitär aufgebaut sind.

4. Überwachungsverfahren nach Anspruch 3,
**dadurch gekennzeichnet,**
**dass** die erste oder die zweite Überwachungseinrichtung (17, 18) mit der Steuereinrichtung (4) der Maschine identisch ist.

5. Überwachungsverfahren nach Anspruch 4,
**dadurch gekennzeichnet,**
**dass** die von der Steuereinrichtung (4) der Maschine verschiedene Überwachungseinrichtung (17, 18) als mit der Steuereinrichtung (4) der Maschine datentechnisch verbundener Industrie-PC (13) ausgebildet ist.

6. Überwachungsverfahren nach einem der obigen Ansprüche,
**dadurch gekennzeichnet,**
- **dass** die erste Überwachungseinrichtung (17) anhand eines ersten Modells (21) der Maschine in Verbindung mit einer unmittelbar vorhergehenden oder unmittelbar bevorstehenden Sollverfahrbewegung (X1*, X2*) der verfahrbaren Elemente (1 bis 3, 6 bis 8, 10) der Maschine oder einer unmittelbar vorhergehenden Istverfahrbewegung (X) der verfahrbaren Elemente (1, bis 3, 6 bis 8, 10) der Maschine prüft, ob eine Kollision eines verfahrbaren Elements (1 bis 3, 6 bis 8, 10) der Maschine mit einem anderen verfahrbaren Element (1 bis 3, 6 bis 8, 10) der Maschine oder dem ortsfest angeordneten Element (16) droht,
- **dass** die zweite Überwachungseinrichtung (18) anhand eines zweiten Modells (22) der Werkzeugmaschine in Verbindung mit der unmittelbar vorhergehenden oder unmittelbar bevorstehenden Sollverfahrbewegung (X1*, X2*) der verfahrbaren Elemente (1 bis 3, 6 bis 8, 10) der Maschine oder der unmittelbar vorhergehenden Istverfahrbewegung (X) der verfahrbaren Elemente (1 bis 3, 6 bis 8, 10) der Werkzeugmaschine prüft, ob eine Kollision eines verfahrbaren Elements (1 bis 3, 6 bis 8, 10) der Werkzeugmaschine mit einem anderen verfahrbaren Element (1 bis 3, 6 bis 8, 10) der Werkzeugmaschine oder dem ortsfest angeordneten Element (16) droht,
- **dass** das erste Modell (21) mittels erster Modellparameter (P1a) parametrierbar ist und das zweite Modell (22) mittels zweiter Modellparameter (P2a) parametrierbar ist und
- **dass** die zweiten Modellparameter (P2a) dem zweiten Modell (22) unabhängig von der Vorgabe der ersten Modellparameter (P1a) an das erste Modell (21) vorgegeben werden.

7. Überwachungsverfahren nach Anspruch 6,
**dadurch gekennzeichnet,**
**dass** die ersten oder die zweiten Modellparameter (P1a, P2a) dem ersten oder dem zweiten Modell (21, 22) automatisiert aus einer ersten Parameterquelle (23) vorgegeben werden und dass nach dem Vorgeben der ersten oder zweiten Modellparameter (P1a, P2a) an das erste oder zweite Modell (21, 22) eine Vorgabe der zweiten oder ersten Modellparameter (P2a, P1a) an das zweite oder erste Modell (22, 21) aus der ersten Parameterquelle (23) blockiert wird.

8. Überwachungsverfahren nach Anspruch 6 oder 7,
**dadurch gekennzeichnet,**
- **dass** das erste Modell (21) zusätzlich zu den ersten Modellparametern (P1a) mittels erster Setup-Parameter (P1b) parametrierbar ist und das zweite Modell (22) zusätzlich zu den zweiten Modellparametern (P2a) mittels zweiter Setup-Parameter (P2b) parametrierbar ist und
- **dass** die zweiten Setup-Parameter (P2b) dem zweiten Modell (22) unabhängig von der Vorgabe der ersten Setup-Parameter (P1b) an das erste Modell (21) vorgegeben werden.

9. Überwachungsverfahren nach Anspruch 8,
**dadurch gekennzeichnet,**
**dass** die ersten oder die zweiten Setup-Parameter (P1b, P2b) dem ersten oder dem zweiten Modell (21, 22) automatisiert aus einer zweiten Parameterquelle (24) vorgegeben werden und dass nach dem Vorgeben der ersten oder zweiten Setup-Parameter (P1b, P2b) an das erste oder zweite Modell (21, 22) eine Vorgabe der zweiten oder ersten Setup-Parameter (P2b, P1b) an das zweite oder erste Modell (22, 21) aus der zweiten Parameterquelle (24) blockiert wird.

10. Überwachungsverfahren nach einem der Ansprüche 1 bis 5,
**dadurch gekennzeichnet,**
- **dass** die erste Überwachungseinrichtung (17) anhand von sensorisch erfassten Signalen (S) ohne Verwendung eines Modells der Maschine Abstände der verfahrbaren und ortsfesten Elemente (1 bis 3, 6 bis 8, 10, 16) der Maschine voneinander ermittelt und auf Gefahr einer Kollision erkennt, wenn die Abstände der verfahrbaren und ortsfesten Elemente (1 bis 3, 6 bis 8, 10, 16) voneinander vorgegebene Minimalabstände erreichen oder unterschreiten und/oder
- **dass** die zweite Überwachungseinrichtung (18) anhand von sensorisch erfassten Signalen (S) ohne Verwendung eines Modells der Maschine Abstände der verfahrbaren und ortsfesten Elemente (1 bis 3, 6 bis 8, 10, 16) der Maschine voneinander ermittelt und auf Gefahr einer Kollision erkennt, wenn die Abstände der verfahrbaren und ortsfesten Elemente (1 bis 3, 6 bis 8, 10, 16) voneinander vorgegebene Minimalabstände erreichen oder unterschreiten.

11. Überwachungsverfahren nach einem der obigen Ansprüche,
**dadurch gekennzeichnet,**
**dass** die erste und/oder die zweite Überwachungseinrichtung (17, 18) im Rahmen der Prüfung, ob die Gefahr einer Kollision droht, eine Verfahrgeschwindigkeit (v) der Elemente (1 bis 3, 6 bis 8, 10) der Maschine und/oder Geschwindigkeiten, mit welchen sich die Abstände der Elemente (1 bis 3, 6 bis 8, 10, 16) der Maschine voneinander verringern, berücksichtigen.

12. Überwachungsverfahren nach einem der obigen Ansprüche,
**dadurch gekennzeichnet,**
**dass** die erste und die zweite Überwachungseinrichtung (17, 18) zum korrigierenden Eingreifen in die Ansteuerung der Antriebe (5) voneinander verschiedene Elemente (4, 25, 26) von Signalketten zwischen der Steuereinrichtung (4) der Maschine und die verfahrbaren Elemente (1 bis 3, 6 bis 8, 10, 16) verfahrenden Elektromotoren (27) ansteuern.

13. Überwachungsverfahren nach Anspruch 12,
**dadurch gekennzeichnet,**
**dass** die erste oder die zweite Überwachungseinrichtung (17, 18) zum korrigierenden Eingreifen in die Ansteuerung der Antriebe (5) ein erstes Korrektursignal (K1) an die Steuereinrichtung (4) der Maschine übermittelt und dass die zweite oder die erste Überwachungseinrichtung (18, 17) zum korrigierenden Eingreifen in die Ansteuerung der Antriebe (5) zweite Korrektursignale (K2) an der Steuereinrichtung (4) nachgeordnete, den Elektromotoren (27) hingegen vorgeordnete Antriebssteuerungen (25) der Maschine übermittelt.

14. Aus einem ersten und einem zweiten Computerprogramm (11, 14) bestehende Gruppe von Computerprogrammen (11, 14), wobei das erste Computerprogramm (11) ersten Maschinencode (19) umfasst, der von einer ersten Überwachungseinrichtung (17) unmittelbar abarbeitbar ist, und das zweite Computerprogramm (14) zweiten Maschinencode (20) umfasst, der von einer zweiten Überwachungseinrichtung (18) unmittelbar abarbeitbar ist, wobei die Abarbeitung des ersten und des zweiten Maschinencodes (19, 20) durch die erste und zweite Überwachungseinrichtung (17, 18) bewirkt, dass die erste und die zweite Überwachungseinrichtung (17, 18) zusammen ein Überwachungsverfahren nach einem der obigen Ansprüche ausführen, wobei das erste und das zweite Computerprogramm (11, 14) diversitär ausgebildet sind.

15. Aus einer ersten und einer zweiten Überwachungseinrichtung (17, 18) bestehende Gruppe von Überwachungseinrichtungen (17, 18), wobei die erste Überwachungseinrichtung (17) mit einem ersten Computerprogramm (11) der Gruppe von Computerprogrammen (11, 14) nach Anspruch 14 programmiert ist und die zweite Überwachungseinrichtung (18) mit einem zweiten Computerprogramm (14) der Gruppe von Computerprogrammen (11, 14) nach Anspruch 14 programmiert ist, so dass die erste und die zweite Überwachungseinrichtung (17, 18) im Betrieb zusammen ein Überwachungsverfahren nach einem der Ansprüche 1 bis 13 ausführen.

16. Gruppe von Überwachungseinrichtungen nach Anspruch 15,
**dadurch gekennzeichnet,**
**dass** die erste oder die zweite Überwachungseinrichtung (17, 18) voneinander verschiedene Einrichtungen sind, insbesondere diversitär ausgebildet sind.
